# EUROPÄISCHE PATENTSCHRIFT

(11) **EP 2 019 758 B1**
(45) Veröffentlichungstag und Bekanntmachung des Hinweises auf die Patenterteilung: **11.11.2009**
(21) Anmeldenummer: 07729436.1
(22) Anmeldetag: 23.05.2007
(51) Int. Cl.: B60H 1/00, G05G 1/08

(54) **DREHBEDIENEINHEIT, INSBESONDERE SOLLWERT-DREHBEDIENEINHEIT, FÜR EINE FAHRZEUGHEIZUNGSANLAGE UND INSBESONDERE FAHRZEUGKLIMAANLAGE**
ROTARY CONTROL UNIT, IN PARTICULAR NOMINAL VALUE ROTARY CONTROL UNIT, FOR A VEHICLE HEATING SYSTEM AND IN PARTICULAR VEHICLE AIR CONDITIONING SYSTEM
UNITE DE COMMANDE DE ROTATION, NOTAMMENT UNITE DE COMMANDE DE ROTATION A VALEUR DE CONSIGNE POUR UNE INSTALLATION DE CHAUFFAGE D'UN VEHICULE ET EN PARTICULIER D'UNE INSTALLATION DE CLIMATISATION D'UN VEHICULE

(30) Priorität: 23.05.2006 DE 102006024066
(43) Veröffentlichungstag der Anmeldung: 04.02.2009
(73) Patentinhaber: Behr-Hella Thermocontrol GmbH, 70190 Stuttgart (DE)
(72) Erfinder: KNITTEL, Otto, 59494 Soest (DE)
(74) Vertreter: Hilleringmann, Jochen
(86) Internationale Anmeldenummer: PCT/EP2007/054998
(87) Internationale Veröffentlichungsnummer: WO 2007/135169

(56) Entgegenhaltungen:
- EP-A- 1 513 038
- FR-A1- 2 833 387
- US-A1- 2006 082 545
- US-A1- 2006 105 698

## Beschreibung

Die Erfindung betrifft eine Drehbedieneinheit, insbesondere Sollwert-Drehbedieneinheit, für eine Fahrzeugheizungsanlage und insbesondere Fahrzeugklimaanlage.

Drehbedieneinheiten zur manuellen Bedienung der diversen Komponenten eines Fahrzeuges sind grundsätzlich bekannt. So wird beispielsweise bei einer Fahrzeugheizungsanlage und insbesondere Fahrzeugklimaanlage eines Fahrzeuges die Sollwerttemperatur über ein drehbares Drehbedienelement eingestellt. In Abhängigkeit von unterschiedlichen Designforderungen ist es üblich, dass die Drehbedieneinheiten unterschiedliche Haptik-Eigenschaften aufweisen. Beispielsweise lassen sich die Drehbedienelemente je nach Kfz-Hersteller unterschiedlich leicht- bzw. schwergängig verstellen. Auch die Rastpunkte, die zur Erhöhung des Komforts bei der Verdrehung der Drehbedienelemente vorgesehen sein können, können je nach Kfz-Hersteller unterschiedlich sein, was ihre Lage und ihren Verrastungsgrad angeht.

Es ist bekannt, all die zuvor genannten Parameter bei einem Drehbedienelement dadurch zu realisieren, dass das Halte- oder Gegendrehmoment, welches auf ein Drehbedienelement wirkt, mit Hilfe eines Elektromotors realisiert wird, mit dessen Antriebswelle das Drehbedienelement mechanisch gekoppelt ist (S.z.B. EP-A-1 513 038). Derartige Systeme werden auch Forced-Feedback-Systeme genannt. Die Elektromotoren derartiger Systeme erfordern je nach konstruktiver Ausgestaltung eine nicht unerhebliche Bestromung zur Erzeugung des jeweiligen Moments, was zu Verlustleistungen führt, die sich negativ auf die Gesamtenergiebilanz auswirken.

Aufgabe der Erfindung ist es, eine Drehbedieneinheit und insbesondere eine Sollwert-Drehbedieneinheit, für eine Fahrzeugkomponente zu realisieren, wobei die Drehbedieneinheit zur Erzeugung eines Halte- bzw. Gegendrehmoments mit einem Elektromotor versehen ist und nur geringe Verlustleistungen erzeugt.

Zur Lösung dieser Aufgabe wird mit der Erfindung eine Drehbedieneinheit, insbesondere Sollwert-Drehbedieneinheit, für eine Fahrzeugheizungsanlage und insbesondere Fahrzeugklimaanlage vorgeschlagen, wobei die Drehbedieneinheit versehen ist mit den Merkmalen des Anspruchs 1.

Bei der Erfindung ist die Sensoreinheit zur Erkennung einer sich dem Drehbedienelement annähernden oder das Drehbedienelement berührenden Hand ausgebildet. Wenn diese Annäherungssensorik anspricht, wird die Ansteuerschaltung zur Bestromung des Elektromotors zwecks Erzeugung des Moments in oder gegen die Drehrichtung (Halte- (bzw. Gegendreh-)moment) aktiviert.

Erfindungsgemäß ist also eine Bestromung des Elektromotors nur dann vorgesehen, wenn eine Verstellung des Drehbedienelements beabsichtigt ist, d.h. wenn eine gewünschte Bedienung des Drehbedienelements durch Annäherung an dieses oder dessen Berührung mit der Hand oder durch den Beginn einer Verdrehung erkannt wird. Hierdurch kann der Elektromotor während anderer Zeiträume stromlos geschaltet werden, was eine Energieeinsparung zur Folge hat und Verlustleistungen in dem Elektromotor reduziert.

In vorteilhafter Weiterbildung der Erfindung kann die Sensoreinheit mit einem Lagesensor zur Ermittlung eines Verdrehens der Antriebswelle des Elektromotors versehen sein. Derartige Elektromotoren (mit Lagesensoren) existieren grundsätzlich und können mit Vorteil bei der Erfindung eingesetzt werden. Der Lagesensor ist auch zur Variation des Halte- bzw. Gegendrehmoments für die Antriebswelle des Elektromotors in Abhängigkeit von der Verdrehung des Drehbedienelements erforderlich. Nach Aktivierung der Ansteuerschaltung kann diese den Lagesensor auswerten und je nach Drehstellung der Antriebswelle und damit des Drehbedienelements ein definiertes Moment vorgeben.

Zusätzlich kann die Sensoreinheit bei der oben erwähnten ersten Variante der Erfindung auch noch mit einer Näherungs- oder Berührungssensorik zur Detektion einer sich dem Drehbedienelement annähernden oder das Drehbedienelement berührenden Hand versehen sein.

Zur weiteren vorteilhaften Ausgestaltung der Drehbedienelemente beider Varianten der Erfindung kann die Ansteuerschaltung den Elektromotor zur Erzeugung von in Abhängigkeit von der aktuellen Drehstellung der Antriebswelle unterschiedlich großen Halte- und/oder Gegendrehmomenten unterschiedlich stark bestromen, wobei das Drehbedienelement grundsätzlich drehfest auf der Antriebswelle des Elektromotors angeordnet sein kann und es ferner möglich ist, dass der Elektromotor ein Gleichstrommotor mit Kommutator ist.

Mit dem erfindungsgemäßen Konzept der Aktivierung des vom Elektromotor erzeugten Moments in oder gegen die Drehrichtung (Halte- bzw. Gegendrehmoments) ist es ferner möglich, nicht nur elektromechanisch auf das Drehbedienelement einzuwirken, wenn eine Verdrehung dieses Elements erfolgt oder beabsichtigt ist; es ist auch möglich in Abhängigkeit von der Verdrehung des Drehbedienelements akustische Signale zu erzeugen, die beispielsweise ein Rastgeräusch simulieren.

Mit dem erfindungsgemäßen Konzept ist es also möglich,
- das Moment in oder gegen die Drehrichtung (Halte- bzw. Gegendrehmoment) erst bei Annäherung einer Hand oder bei Berührung des Drehbedienelements mit der Hand bzw. bei Verstellung des Drehbedienelements mit der Hand aufzubauen, um eine Überhitzung des Elektromotors zu vermeiden,
- den Absolutwert des Halte- bzw. Drehmoments durch Veränderung der Motorversorgungsspannung vorzugeben, wobei die Versorgungsspannung drehwinkelabhängig vorgegeben bzw. verändert wird,
- die Ansteuerung des Elektromotors mit einer Rechteckspannung in der Weise zu bewirken, dass der Elektromotor für die erste Halbperiode seiner Ansteuerung zur Rotation in der einen Richtung und in der zweiten Halbperiode seiner Ansteuerung zur Rotation in der Gegenrichtung betrieben wird, wobei die Frequenz, mit der dies erfolgt, derart hoch gewählt wird, dass keine Vibrationen am Drehbedienelement spürbar sind.

In ihrer allgemeinsten Form betrifft die Erfindung also eine Drehbedieneinheit insbesondere Sollwert-Drehbedieneinheit für eine Fahrzeugheizungsanlage und insbesondere Fahrzeugklimaanlage mit einer Sensor- und Elektronikeinheit zur Erkennung einer gewünschten Bedienung der Sollwert-Drehbedieneinheit, wobei die Sensor- und Elektronikeinheit die Sollwert-Drehbedieneinheit derart aktiviert, dass ein Moment in oder gegen die Drehrichtung ausgelöst werden kann. Bei dieser Drehbedieneinheit erfolgt die Erkennung einer gewünschten Bedienung bei Annäherung oder bei Berührung oder bei beginnender Drehung. Die Sensor- und Elektronikeinheit aktiviert insbesondere einen Elektromotor mit einer Antriebswelle, die mechanisch mit dem Drehbedienelement gekoppelt ist, und macht damit zum Zweck der Energieeinsparung und zur Reduktion von Verlustleistungen eine Bestromung des Motors zur Erzeugung eines Moments in bzw. gegen die Drehrichtung möglich. Hierbei kann vorgesehen sein, dass zur Ermittlung eines Verdrehens der Antriebswelle ein Lagesensor vorhanden ist, der starr mit der Antriebswelle gekoppelt ist. Dabei kann vorgesehen sein, dass nach Aktivierung durch die Sensor- und Elektronikeinheit die Elektronikeinheit den Lagesensor auswertet und je nach Stellung des Lagesensors ein definiertes Moment vorgegeben wird. Ferner ist es möglich, dass in Abhängigkeit von der Verdrehung des Drehbedienelements durch eine weitere Elektronik und einem akustischen Geber akustische Signale erzeugt werden, die beispielsweise ein Rastgeräusch simulieren.

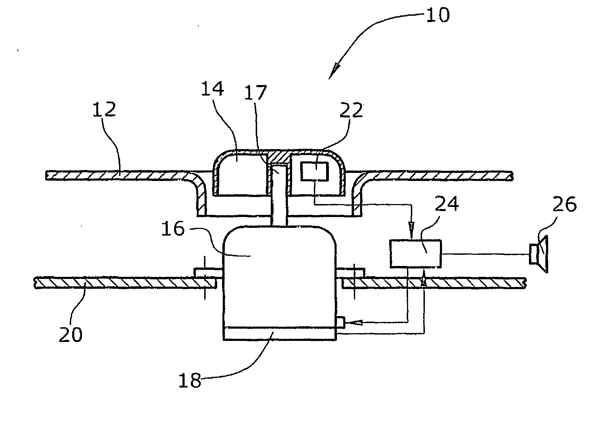

Die Erfindung wird nachfolgend anhand der Zeichnung näher erläutert, in der schematisch und ausschnittsweise ein Steuergerät für eine Fahrzeug-Klimaanlage dargestellt ist.

Bei dem hier zu beschreibenden Ausführungsbeispiel weist das Steuergerät 10 eine Frontblende 12 auf, an der sich neben diversen Bedienelementen und einer oder mehreren Anzeigen auch ein Drehbedienelement 14 zur Vorgabe der Solltemperatur befindet. Das Halte- bzw. Gegendrehmoment für das Drehbedienelement 14 wird in diesem Ausführungsbeispiel von einem Elektromotor 16 mit Kommutator (im einzelnen nicht dargestellt) erzeugt, der eine Antriebswelle 17 aufweist und über einen Lagesensor 18 zur Detektion der Drehstellung der Antriebswelle 17 verfügt. Das Gehäuse dieses Motors 16 befindet sich auf einer Träger- bzw. Leiterplatte 20, die diverse (im einzelnen nicht dargestellte) elektrische, elektrooptische und elektronische Bauteile aufweist. Das Drehbedienelement 14 ist auf die Antriebswelle 17 aufgesteckt und mit dieser drehfest verbunden. Alternativ kann zwischen der Drehachse des Drehbedienelements 14 und der Antriebswelle 17 auch ein Getriebe angeordnet sein.

Das Drehbedienelement 14 (oder die Frontblende 12) verfügt über einen Näherungssensor 22, der eine sich dem Bedienelement 14 annähernde Hand oder aber die Kontaktierung durch eine Hand erkennt. Das Ausgangssignal des Näherungssensors 22 sowie das Signal des Lagesensors 18 werden einer Ansteuerschaltung 24 zugeführt, die ihrerseits die elektrische Ansteuerung des Elektromotors 16 durchführt.

Die Ansteuerung des Elektromotors 16 zum Aufbau eines Halte- bzw. Gegendrehmoments des Drehbedienelements 14 in Abhängigkeit von der Drehstellung des Drehbedienelements ist im Stand der Technik grundsätzlich bekannt. Je nach den Designanforderungen kann das Halte- bzw. Gegendrehmoment durch entsprechend variierende Bestromung zur Imitierung von Rastungen kurzzeitig erhöht werden, wenn das Drehbedienelement durch die einzelnen imitierten Rastpunkte gedreht wird. Bei der Erfindung geht es um die Aktivierung dieser Ansteuerung erst dann, wenn eine Verdrehung des Drehbedienelements 14 tatsächlich beabsichtigt ist. Dies wird durch den Näherungssensor 22 realisiert, der erst dann, wenn er anspricht, die Ansteuerschaltung 24 aktiviert. Andere Verdrehungen des Drehbedienelements, die beispielsweise unabsichtlich erfolgen, indem versehentlich ein Gegenstand an dem Drehbedienelement 14 entlanggeführt wird, was zu einer Verdrehung des Drehbedienelements führt, werden zweckmäßigerweise dadurch negiert, dass nur solche Verdrehungen des Drehbedienelements 14 elektrisch ausgewertet werden und als gewollte Verstellung interpretiert werden, bei denen der Näherungssensor 22 während der Verdrehung des Drehbedienelements 14 angesprochen hat.

Die Bestromung des Elektromotors 16 nach einer Aktivierung wird zweckmäßigerweise dann wieder deaktiviert, wenn der Näherungssensor 22 keine sich in der Nähe des Bedienelements 14 befindliche oder das Drehelement 14 berührende Hand mehr erkennt.

Anstelle des Näherungssensors 22 kann es für die Erfindung auch ausreichend sein, den Aufbau des Halte- bzw. Gegendrehmoments in Abhängigkeit von dem Ansprechen des Lagesensors 18 zu realisieren. Der Lagesensor 18 dient also hierbei auch zur Aktivierung der Bestromung des Elektromotors 16. Ferner ist bei dem hier beschriebenen Ausführungsbeispiel vorgesehen, über einen elektroakustischen Wandler 26, der von der Ansteuerschaltung 24 oder einer dieser nachgeschalteten Einheit ansteuerbar ist, ein akustisches Signal in Form z. B. eines Rastgeräusches zu erzeugen.

### BEZUGSZEICHENLISTE

- 10: Steuergerät
- 12: Frontblende
- 14: Drehbedienelement
- 16: Elektromotor
- 17: Antriebswelle des Elektromotors
- 18: Lagesensor
- 20: Leiterplatte
- 22: Näherungssensor
- 24: Ansteuerschaltung
- 26: elektroakustischer Wandler

## Patentansprüche

1. Drehbedieneinheit, insbesondere Sollwert-Drehbedieneinheit für eine Fahrzeugheizungsanlage und insbesondere Fahrzeugklimaanlage, mit
- einem drehbaren Drelibedienelement (14),
- einem Elektromotor (16) mit einer Antriebswelle (17), die mechanisch mit dem Drehbedienelement (14) gekoppelt ist, und
- einer Ansteuerschaltung (24) zur Bestromung des Elektromotors (16) zwecks Erzeugung eines Haltemoments zur Verhinderung einer ungewollten Verdrehung des Drehbedienelements (14) und/oder zum Aufbau eines Widerstandes beim Verdrehen des Drehbedienelements,
**gekennzeichnet durch,**
- eine Sensoreinheit (22) zur Erkennung einer sich dem Drehbedienelement (14) annähernden oder das Drehbedienelement (14) berührenden Hand,
- wobei die Ansteuerschaltung (24) zur Bestromung des Elektromotors (16) aktivierbar ist, wenn die Sensoreinheit (22) eine sich dem Drehbedienelement (14) annähernde oder das Drehbedienelement (14) berührende Hand erkennt.

2. Drehbedieneinheit nach Anspruch 1, **dadurch gekennzeichnet, dass** die Ansteuerschaltung (24) zur Beendigung der Bestromung des Elektromotors (16) nach einer Aktivierung wieder deaktivierbar ist, wenn die Sensoreinheit (22) kein Verdrehen des Drehbedienelements (14) oder keine sich in der Nähe des Drehbedienelements (14) befindliche oder dieses berührende Hand erkennt.

3. Drehbedieneinheit nach Anspruch 1 oder 2, **dadurch gekennzeichnet, dass** die Ansteuerschaltung (24) den Elektromotor zur Erzeugung von in Abhängigkeit von der aktuellen Drehstellung der Antriebswelle (17) unterschiedlich großen Halte- und/oder Gegendrehmomenten unterschiedlich stark bestromt.

4. Drehbedieneinheit nach einem der Ansprüche 1 bis 3, **dadurch gekennzeichnet, dass** das Drehbedienelement (14) drehfest auf der Antriebswelle (17) des Elektromotors (16) angeordnet ist.

5. Drehbedieneinheit nach einem der Ansprüche 1 bis 4, **dadurch gekennzeichnet, dass** der Elektromotor (16) ein Gleichstrommotor mit Kommutator ist.

6. Drehbedieneinheit nach einem der Ansprüche 1 bis 5, **dadurch gekennzeichnet, dass** die Sensoreinheit (22) einen Lagesensor (18) zur Ermittlung eines Verdrehens der Antriebswelle (17) des Elektromotors (16) aufweist.

## Claims

1. A rotary control unit, in particular a nominal value control unit, for a vehicle heating system and in particular a vehicle air conditioning system, comprising
- a rotatable rotary control element (14),
- an electric motor (16) with a drive shaft (17) that is mechanically coupled with the rotary control element (14),
- a control circuit (24) for supplying current to the electric motor (16) so as to generate a dwell moment to prevent an unintentional rotation of the rotary control element (14) and/or to build up a resistance as the rotary control element is rotated,
**characterized by**
- a sensor unit (22) for detecting a hand approaching the rotary control element (14) or touching the rotary control element (14),
- the control circuit (24) being activatable to supply current to the electric motor (16), if the sensor unit (22) detects a hand which is approaching the rotary control element (14) or is touching the rotary control element (14).

2. The rotary control element of claim 1, **characterized in that** the control circuit (24) is deactivatable again to terminate the supply of current to the electric motor (16) after activation, if the sensor unit (22) does not detect a rotation of the rotary control element (14) or no longer detects a hand near the rotary control element (14) or touching the same.

3. The rotary control element of claim 1 or 2, **characterized in that** the control circuit (24) supplies different current levels to the electric motor to generate different magnitudes of dwell moments and/or counter torques depending on the actual rotational position of the drive shaft (17).

4. The rotational control element of one of claims 1 to 3, **characterized in that** the rotary control element (14) is arranged on the drive shaft (17) of the electric motor (16) so as to rotate therewith.

5. The rotational control element of one of claims 1 to 4, **characterized in that** the electric motor (16) is a DC motor with a commutator.

6. The rotational control element of one of claims 1 to 5, **characterized in that** the sensor unit (22) has a position sensor (18) for detecting a rotation of the drive shaft (17) of the electric motor (16).

## Revendications

1. Unité de commande de rotation, notamment une unité de commande de rotation à valeur de consigne pour une installation de chauffage d'un véhicule et en particulier d'une installation de climatisation d'un véhicule, comprenant
- un élément de commande de rotation (14) rotatif;
- un moteur électrique (16) avec un arbre d'entraînement (17) couplé de manière mécanique à l'élément de commande de rotation (14), et
- un circuit de commande (24) pour l'alimentation électrique dudit moteur électrique (16) afin de générer un couple de maintien pour empêcher une rotation inattendue dudit élément de commande de rotation (14) et/ou pour développer une résistance lors de la rotation dudit élément de commande de rotation,
**caractérisée par**
- une unité de capteur (22) pour la détection d'une main s'approchant dudit élément de commande de rotation (14) ou touchant ledit élément de commande de rotation (14),
- le circuit de commande (24) étant activable pour l'alimentation électrique dudit moteur électrique (16), si l'unité de capteur (22) détecte une main s'approchant dudit élément de commande de rotation (14) ou touchant ledit élément de commande de rotation (14).

2. Unité de commande de rotation selon la revendication 1, **caractérisée en ce qu'**afin de terminer l'alimentation électrique dudit moteur électrique (16), le circuit de commande (24) est déactivable après une activation si l'unité de capteur (22) ne détecte pas une main s'approchant dudit élément de commande de rotation (14) ou touchant ledit élément de commande de rotation (14).

3. Unité de commande de rotation selon la revendication 1 ou 2, **caractérisée en ce que** l'alimentation en électricité dudit moteur électrique par ledit circuit de commande (24) varie en intensité pour générer des couples de maintien et/ou de contre-rotation de différentes valeurs en fonction de la position de rotation actuelle de l'arbre d'entraînement (17).

4. Unité de commande de rotation selon l'une des revendications 1 à 3, **caractérisée en ce que** ledit élément de commande de rotation (14) est disposé d'une manière rigide sur ledit arbre d'entraînement (17) dudit moteur électrique (16).

5. Unité de commande de rotation selon l'une des revendications 1 à 4, **caractérisée en ce que** ledit moteur électrique (16) est un moteur à courant continu avec commutateur.

6. Unité de commande de rotation selon l'une des revendications 1 à 5, **caractérisée en ce que** l'unité de capteur (22) comprend un capteur de position (18) pour détecter un déplacement en rotation dudit arbre d'entraînement (17) dudit moteur électrique (16).
